# FASCICULE DE BREVET EUROPEEN

(11) **EP 2 069 614 B1**
(45) Date de publication et mention de la délivrance du brevet: **28.07.2010**
(21) Numéro de dépôt: 07858387.9
(22) Date de dépôt: 28.09.2007
(51) Int. Cl.: F01L 9/04, F02D 13/02

(54) **DISPOSITIF ET PROCÉDÉ DE COMMANDE D'UNE SOUPAPE AVEC CONTRÔLE DE L ' ÉNERGIE CONSOMMABLE**
VORRICHTUNG UND VERFAHREN ZUR STEUERUNG EINES VENTILS MIT ENERGIEVERBRAUCHSÜBERWACHUNG
DEVICE AND METHOD FOR CONTROLLING A VALVE WITH CONSUMABLE ENERGY MONITORING

(30) Priorité: 03.10.2006 FR 0608635
(43) Date de publication de la demande: 17.06.2009
(73) Titulaire: Valeo Systèmes de Contrôle Moteur, 95892 Cergy Pontoise (FR)
(72) Inventeur: GELEZ, Nicolas, 78230 Le Pecq (FR); BOUCHEZ, Boris, 78100 Saint Germain en Laye (FR); DALISSIER, Jean-Guiherm, 27380 Charleval (FR)
(74) Mandataire: Rolland, Jean-Christophe
(86) Numéro de dépôt international: PCT/FR2007/001589
(87) Numéro de publication internationale: WO 2008/040865

(56) Documents cités:
- EP-A- 0 987 406
- EP-A1- 1 241 325
- EP-A2- 1 162 349
- WO-A-00/77349
- WO-A-00/79548
- DE-A1- 19 526 683
- DE-A1- 19 807 875
- DE-A1- 19 902 664
- US-A- 5 799 630

## Description

La présente invention concerne un dispositif et un procédé de commande d'une soupape telle qu'une soupape d'un moteur thermique utilisable pour mouvoir un véhicule automobile.

### ARRIERE PLAN DE L'INVENTION

Un dispositif de commande de soupape est agencé pour déplacer ladite soupape entre une position d'ouverture et une position de fermeture pour permettre, selon que la soupape est une soupape d'admission ou une soupape d'échappement, soit l'admission de combustible dans une chambre de combustion du moteur, soit l'échappement des gaz brûlés résultant de la combustion du combustible.

Un tel dispositif de commande comprend généralement un organe d'actionnement de la soupape, mobile entre deux positions extrêmes correspondant aux positions d'ouverture et de fermeture de la soupape, et un système élastique agencé pour faire osciller l'organe d'actionnement entre les deux positions extrêmes. Ce système élastique comprend généralement deux ressorts antagonistes, à savoir un premier ressort agissant sur l'organe d'actionnement pour le rappeler vers la position extrême correspondant à la position d'ouverture et un deuxième ressort agissant sur la soupape pour rappeler celle-ci en position de fermeture et donc également l'organe d'actionnement vers la position extrême correspondant à la position de fermeture. Le système élastique est en équilibre lorsque l'organe d'actionnement est dans une position sensiblement médiane entre ses positions extrêmes. Le dispositif de commande comprend en outre des électroaimants associés à une unité de commande pour attirer l'organe d'actionnement vers l'une ou l'autre de ses positions extrêmes. L'unité de commande est programmée pour piloter les électroaimants en mettant en oeuvre un procédé d'asservissement du courant d'alimentation des électroaimants à une position de l'organe d'actionnement.

Le principe de fonctionnement de ce dispositif de commande consiste à utiliser le système élastique pour déplacer l'organe d'actionnement vers ses positions extrêmes et chaque électroaimant pour finir le mouvement de l'organe d'actionnement vers une de ses positions extrêmes et maintenir celui-ci dans cette position extrême.

Des perturbations telles qu'une contre-pression, des frottements excessifs, des bruits électriques... peuvent altérer le fonctionnement du dispositif de commande au point que l'organe d'actionnement échappe à la force d'attraction exercée par un des électroaimants pour l'attirer dans la position extrême correspondante et tende à repartir vers son autre position extrême. L'unité de commande alimente alors l'électroaimant pour augmenter la force d'attraction et forcer l'organe d'actionnement à revenir vers la position extrême de destination initiale.

Le document EP1241325 décrit un tel dispositif de commande adapté à déterminer une quantité d'énergie nécessaire à l'électroaimant pour amener l'organe d'actionnement dans une position extrème.

La consommation des électroaimants est alors particulièrement élevée et le rattrapage de l'organe d'actionnement n'est pas assuré de sorte que la soupape risque d'être incontrôlable pendant un temps suffisant pour altérer de manière sensible le bon fonctionnement du moteur.

### OBJET DE L'INVENTION

Un but de l'invention est de proposer un moyen permettant d'obvier aux inconvénients précités des systèmes actuels.

### RESUME DE L'INVENTION

A cet effet, on prévoit, selon l'invention, un dispositif de commande d'une soupape entre une position d'ouverture et une position de fermeture, comportant :
- un organe d'actionnement de la soupape, mobile entre deux positions extrêmes correspondant aux positions d'ouverture et de fermeture de la soupape,
- un système élastique pour faire osciller l'organe d'actionnement entre les deux positions extrêmes,
- au moins un électroaimant associé à une unité de commande pour attirer l'organe d'actionnement vers l'une ou l'autre de ses positions extrêmes,
l'unité de commande étant agencée pour :
- lors d'une oscillation vers une des positions extrêmes, déterminer une quantité d'énergie nécessaire à l'électroaimant pour amener l'organe d'actionnement dans cette position extrême,
- si cette quantité d'énergie est au plus égale à un seuil prédéterminé, alimenter l'électroaimant pour finir l'oscillation et amener l'organe d'actionnement dans cette position extrême,
- si cette quantité d'énergie est supérieure au seuil prédéterminé, laisser l'organe d'actionnement repartir vers l'autre position extrême.

Ainsi, l'unité de commande n'essaie pas systématiquement de ramener l'organe d'actionnement vers sa position extrême de destination initiale mais peut décider, lorsque la dépense énergétique qui serait nécessaire est supérieure à un seuil prédéterminé, de laisser repartir la soupape vers l'autre position extrême. Il est alors possible de revenir plus rapidement à un cycle normal en limitant la consommation d'énergie.

De préférence, si la quantité d'énergie est supérieure au seuil prédéterminé, l'unité de commande est agencée pour alimenter l'électroaimant de manière à attirer et maintenir l'organe d'actionnement dans l'autre position extrême.

Ainsi, l'organe d'actionnement est déjà en position pour la suite du cycle.

Notamment, lorsque la quantité d'énergie nécessaire à l'électroaimant pour amener l'organe d'actionnement dans la position extrême correspondant à la position d'ouverture de la soupape est supérieure au seuil prédéterminé, l'unité de commande est agencée pour alimenter l'électroaimant de manière à amener l'organe d'actionnement dans la position extrême correspondant à la position de fermeture.

Ceci s'avère relativement sécuritaire et permet notamment d'éviter que la soupape incontrôlée ne vienne, en position ouverte, interférer avec le piston.

Avantageusement, si la quantité d'énergie est supérieure au seuil prédéterminé, l'unité de commande est agencée pour alimenter l'électroaimant de manière à amplifier l'oscillation vers l'autre position extrême.

Ainsi, en amplifiant l'oscillation vers l'autre position extrême, on amplifie également l'oscillation suivante vers la position extrême de destination initiale de sorte que la quantité d'énergie qui sera nécessaire à l'électroaimant pour amener l'organe d'actionnement dans sa position extrême de destination initiale, sera plus faible que celle précédemment nécessaire.

Notamment, lorsque la quantité d'énergie nécessaire à l'électroaimant pour amener l'organe d'actionnement dans la position extrême correspondant à la position de fermeture est supérieure au seuil prédéterminé, l'unité de commande est agencée pour :
- alimenter l'électroaimant de manière à amplifier l'oscillation vers la position extrême correspondant à la position d'ouverture,
- puis lors de l'oscillation suivante vers la position extrême correspondant à la position de fermeture, alimenter l'électroaimant de manière à attirer et maintenir l'organe d'actionnement dans cette position extrême.

Ceci s'avère relativement sécuritaire et permet notamment d'éviter que la soupape incontrôlée ne vienne, en position ouverte, interférer avec le piston.

L'invention a également pour objet un procédé de commande d'une soupape entre une position d'ouverture et une position de fermeture, comportant les étapes de faire osciller un organe d'actionnement de la soupape entre deux positions extrêmes correspondant aux positions d'ouverture et de fermeture de la soupape et d'amener de manière commandée l'organe d'actionnement vers l'une ou l'autre de ses positions extrêmes, le procédé comprenant les étapes de :
- lors d'une oscillation vers une des positions extrêmes, déterminer une quantité d'énergie nécessaire pour amener l'organe d'actionnement dans cette position extrême,
- si cette quantité d'énergie est au plus égale à un seuil prédéterminé, finir l'oscillation et amener l'organe d'actionnement dans cette position extrême,
- si cette quantité d'énergie est supérieure au seuil prédéterminé, laisser l'organe d'actionnement repartir vers l'autre position extrême.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

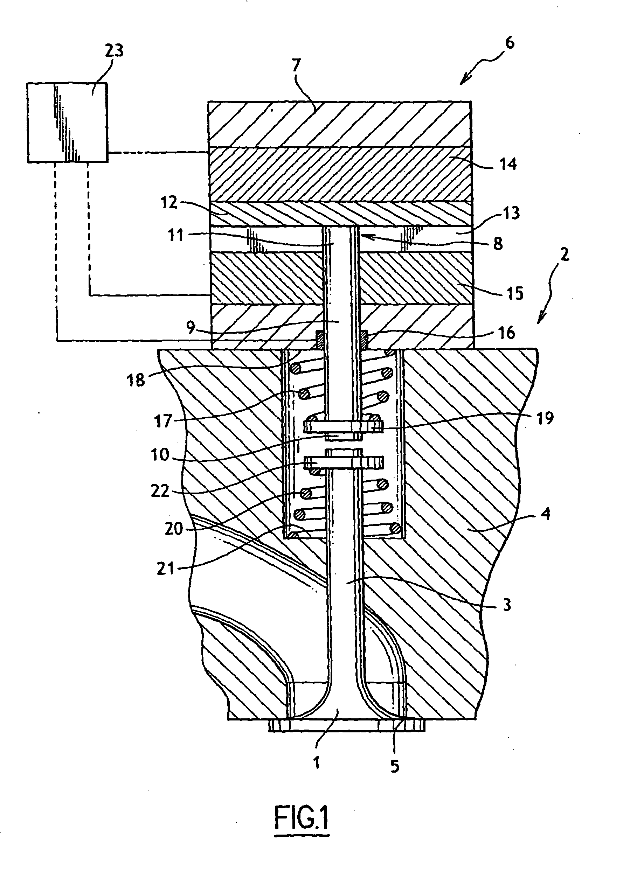

- la figure 1 est une vue schématique partielle d'un moteur thermique équipé d'un dispositif de commande de soupape conforme à l'invention,
- la figure 2 est une vue schématique illustrant le mouvement de l'organe d'actionnement lors rattrapage de la soupape,
- la figure 3 est une vue analogue à celle de la figure 2 montrant un deuxième mode de rattrapage de la soupape.

### DESCRIPTION DETAILLEE DE L'INVENTION

L'invention est ici décrite en application à l'actionnement d'une soupape 1 d'un moteur thermique portant la référence générale 2.

La soupape 1 possède une queue 3 et est montée sur une culasse 4 du moteur thermique 2 pour coulisser entre une position de fermeture dans laquelle la soupape est appliquée contre un siège 5 de la culasse 4 et une position d'ouverture dans laquelle la soupape est décollée du siège 5 de la culasse 4.

La soupape est actionnée entre ces deux positions par l'intermédiaire d'un dispositif de commande, ou actionneur généralement désigné en 6 monté sur la culasse 4 du moteur thermique 2.

L'actionneur comprend un corps 7 dans lequel est monté pour coulisser un organe d'actionnement, ou organe mobile, généralement désigné en 8 comportant une tige 9 ayant une première extrémité 10 agencée pour prendre appui sur une extrémité libre de la queue 3 de la soupape 1 et une deuxième extrémité 11 solidaire d'une palette 12 reçue dans un logement 13 du corps 7 pour coulisser parallèlement à la tige 9.

Le corps 7 incorpore de façon connue en elle-même des moyens électromagnétiques de déplacement de l'organe mobile 8.

Les moyens électromagnétiques comportent un électroaimant 14, de maintien de la palette 12 dans une position dite position extrême de fermeture de la soupape, et un électroaimant 15, de maintien de la palette 12 dans une position dite position extrême d'ouverture de la soupape, qui débouchent sur deux faces opposées du logement 13 du corps 7. La palette 12 est ici en contact avec l'électroaimant 14, 15 lorsqu'elle est dans la position extrême correspondante.

Les électroaimants 14, 15 sont commandés par une unité de commande 23 mettant en oeuvre un procédé d'asservissement à partir d'un courant de consigne et d'une vitesse de déplacement de l'organe mobile 8. La vitesse de déplacement de l'organe mobile 8 est obtenue par dérivation d'un signal de position fourni par un capteur de position 16 de la tige 9. Le capteur de position 16 est par exemple un capteur à effet Hall connu en lui-même.

L'actionneur comprend également, de façon connue en soi, un système élastique de déplacement de l'organe mobile 8.

Le système élastique comprend de façon connue en elle-même un ressort 17 intercalé entre une face 18 du corps 7 et un épaulement 19 de la tige 9 pour rappeler la palette 12 en position extrême d'ouverture et un ressort 20 intercalé entre une face 21 de la culasse 4 et un épaulement 22 de la queue de soupape 3 pour rappeler la soupape 1 en position de fermeture. Le système élastique permet ainsi de faire osciller l'organe mobile 8 entre les positions extrêmes d'ouverture et de fermeture et la soupape 1 entre les positions d'ouverture et de fermeture.

L'unité de commande 23 est programmée pour déterminer, en tout point du mouvement de l'organe mobile 8 vers une de ses positions extrêmes, l'énergie nécessaire pour alimenter l'électroaimant 14, 15 correspondant de manière à amener l'organe mobile 8 dans cette position extrême. Pour ce faire, l'unité de commande 23 dispose de la position de l'organe mobile 8, de la vitesse de l'organe mobile 8 et du courant appliqué dont dépendent l'énergie potentielle, l'énergie cinétique et l'énergie magnétique dont le mouvement de l'organe mobile 8 est titulaire. La quantité d'énergie nécessaire est ensuite comparée à un seuil prédéterminé par exemple en fonction d'impératifs de consommation électrique ou de contraintes de sécurité afin de limiter le courant circulant dans les électroaimants.

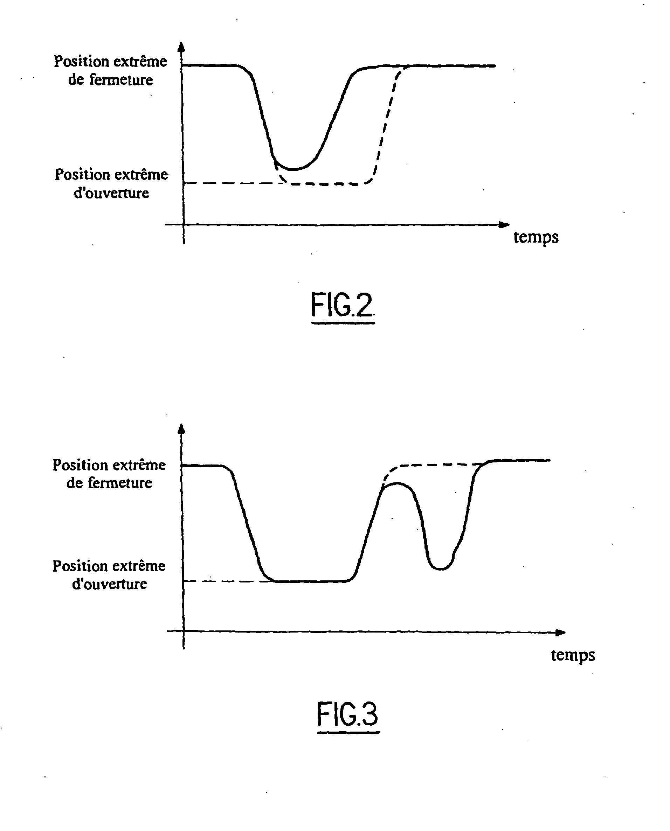

A la figure 2 est illustrée une tentative de déplacement de l'organe mobile 8 vers la position extrême d'ouverture. L'unité de commande 23 cesse d'alimenter l'électroaimant 14, le ressort 17 comprimé se détend et pousse l'organe mobile 8 vers la position extrême d'ouverture et l'unité de commande 23 alimente l'électroaimant 15 pour attirer l'organe mobile 8.

Si la quantité d'énergie nécessaire à l'électroaimant 15 pour amener l'organe mobile 8 dans sa position extrême d'ouverture est au plus égale à un seuil, l'unité de commande 23 alimente l'électroaimant pour amener et maintenir l'organe mobile 8 dans sa position extrême d'ouverture (mouvement, représenté en pointillé sur la figure 2, correspondant à un mode de fonctionnement normal).

Si la quantité d'énergie nécessaire est supérieure au seuil prédéterminé, l'unité de commande 23 laisse repartir l'organe mobile 8 vers sa position extrême de fermeture et alimente l'électroaimant 14 correspondant pour attirer et maintenir l'organe mobile 8 dans la position extrême de fermeture (mouvement, représenté en trait fort sur la figure 2, correspondant à un mode de fonctionnement dégradé).

A la figure 3 est illustrée une tentative de déplacement de l'organe mobile 8 vers sa position extrême de fermeture. L'unité de commande 23 cesse d'alimenter l'électroaimant 15, le ressort 20 se détend et pousse l'organe mobile 8 vers la position extrême de fermeture et l'unité de commande 23 alimente l'électroaimant 15 pour attirer l'organe 8.

Si la quantité d'énergie nécessaire à l'électroaimant 14 pour amener l'organe mobile 8 est inférieure ou égale au seuil prédéterminé, l'unité de commande 23 alimente l'électroaimant 14 en conséquence (mouvement, représenté en pointillé sur la figure 3, correspondant à un mode de fonctionnement normal).

Si la quantité d'énergie nécessaire est supérieure au seuil, l'unité de commande 23 laisse repartir l'organe mobile 8 vers la position extrême d'ouverture et alimente l'électroaimant 15 pour attirer l'organe mobile 8 vers sa position extrême d'ouverture de manière à amplifier l'oscillation de l'organe mobile 8 pour comprimer le ressort 17 de manière que celui-ci exerce un effort plus important pour rappeler l'organe mobile 8 vers sa position extrême de fermeture lors de l'oscillation suivante (mouvement, représenté en trait fort à la figure 3, correspondant à un mode de fonctionnement dégradé). L'effort d'attraction que doit fournir l'électroaimant pour attirer et maintenir l'organe mobile 8 dans sa position extrême d'ouverture sera donc plus faible et nécessitera une quantité d'énergie inférieure au seuil prédéterminé (on est alors à nouveau en mode de fonctionnement normal).

Bien entendu, l'invention n'est pas limitée au mode de réalisation décrit et on peut y apporter des variantes de réalisation sans sortir du cadre de l'invention tel que défini par les revendications.

En particulier, bien que dans le mode de réalisation décrit soit privilégiée la position extrême de fermeture, il est possible de privilégier la position extrême d'ouverture, ou d'avoir des modes de rattrapage identiques dans tous les cas, ou bien encore de choisir en fonction de chaque situation le mode de rattrapage le moins coûteux en énergie.

En outre, l'actionneur peut avoir une structure différente de celle décrite et comprendre par exemple un seul électroaimant, un organe d'actionnement oscillant,...

Le procédé de l'invention est ainsi utilisable avec un dispositif de commande mettant en oeuvre des moyens différents de ceux décrits pour faire osciller l'organe d'actionnement ou pour amener et maintenir l'organe d'actionnement en positions extrêmes.

## Revendications

1. Dispositif de commande d'une soupape (1) entre une position d'ouverture et une position de fermeture, comportant :
- un organe d'actionnement (8) de la soupape, mobile entre deux positions extrêmes correspondant aux positions d'ouverture et de fermeture de la soupape,
- un système élastique (17, 20) pour faire osciller l'organe d'actionnement entre les deux positions extrêmes,
- au moins un électroaimant (14, 15) associé à une unité de commande (23) pour attirer l'organe d'actionnement vers l'une ou l'autre de ses positions extrêmes,
l'unité de commande étant agencée pour :
- lors d'une oscillation vers une des positions extrêmes, déterminer une quantité d'énergie nécessaire à l'électroaimant pour amener l'organe d'actionnement dans cette position extrême,
- si cette quantité d'énergie est au plus égale à un seuil prédéterminé, alimenter l'électroaimant pour finir l'oscillation et amener l'organe d'actionnement dans cette position extrême,
**caractérisé en ce que** :
- si cette quantité d'énergie est supérieure au seuil prédéterminé, laisser l'organe d'actionnement repartir vers l'autre position extrême.

2. Dispositif selon la revendication 1, dans lequel, si la quantité d'énergie est supérieure au seuil prédéterminé, l'unité de commande (23) est agencée pour alimenter l'électroaimant (14, 15) de manière à attirer et maintenir l'organe d'actionnement (8) dans l'autre position extrême.

3. Dispositif selon la revendication 2, dans lequel, lorsque la quantité d'énergie nécessaire à l'électroaimant (15) pour amener l'organe d'actionnement (8) dans la position extrême correspondant à la position d'ouverture de la soupape est supérieure au seuil prédéterminé, l'unité de commande (23) est agencée pour alimenter l'électroaimant (14) de manière à amener l'organe d'actionnement dans la position extrême correspondant à la position de fermeture.

4. Dispositif selon la revendication 1, dans lequel, si la quantité d'énergie est supérieure au seuil prédéterminé, l'unité de commande (23) est agencée pour alimenter l'électroaimant de manière à amplifier l'oscillation vers l'autre position extrême.

5. Dispositif selon la revendication 4, dans lequel, lorsque la quantité d'énergie nécessaire à l'électroaimant (14) pour amener l'organe d'actionnement (8) dans la position extrême correspondant à la position de fermeture est supérieure au seuil prédéterminé, l'unité de commande (23) est agencée pour :
- alimenter l'électroaimant (15) de manière à amplifier l'oscillation vers la position extrême correspondant à la position d'ouverture,
- puis lors de l'oscillation suivante vers la position extrême correspondant à la position de fermeture, alimenter l'électroaimant (14) de manière à attirer et maintenir l'organe d'actionnement dans cette position extrême.

6. Procédé de commande d'une soupape (1) entre une position d'ouverture et une position de fermeture, comportant, selon un mode de fonctionnement normal, les étapes de faire osciller un organe d'actionnement (8) de la soupape entre deux positions extrêmes correspondant aux positions d'ouverture et de fermeture de la soupape et d'amener de manière commandée l'organe d'actionnement vers l'une ou l'autre de ses positions extrêmes, comprenant l'étape de :
- lors d'une oscillation vers une des positions extrêmes, déterminer une quantité d'énergie nécessaire pour amener l'organe d'actionnement dans cette position extrême,
**caractérisé en ce qu'**il comprend en outre les étapes de :
- si cette quantité d'énergie est au plus égale à un seuil prédéterminé, finir l'oscillation et amener l'organe d'actionnement dans cette position extrême, conformément au mode de fonctionnement normal,
- si cette quantité d'énergie est supérieure au seuil prédéterminé, laisser l'organe d'actionnement repartir vers l'autre position extrême, conformément à un mode de fonctionnement dégradé.

7. Procédé selon la revendication 6, dans lequel, si la quantité d'énergie est supérieure au seuil prédéterminé, le procédé en mode de fonctionnement dégradé comprend l'étape d'amener et maintenir l'organe d'actionnement (8) dans l'autre position extrême.

8. Dispositif selon la revendication 7, dans lequel, lorsque la quantité d'énergie nécessaire à l'électroaimant (15) pour amener l'organe d'actionnement (8) dans la position extrême correspondant à la position d'ouverture de la soupape est supérieure au seuil prédéterminé, le procédé comprend l'étape d'amener l'organe d'actionnement dans la position extrême correspondant à la position de fermeture.

9. Dispositif selon la revendication 6, dans lequel, si la quantité d'énergie est supérieure au seuil prédéterminé, le procédé en mode de fonctionnement dégradé comprend l'étape d'amplifier l'oscillation vers l'autre position extrême.

10. Dispositif selon la revendication 9, dans lequel, lorsque la quantité d'énergie nécessaire pour amener l'organe d'actionnement (8) dans la position extrême correspondant à la position de fermeture est supérieure au seuil prédéterminé, le procédé comprend les étapes de ;
- amplifier l'oscillation vers la position extrême correspondant à la position d'ouverture,
- puis lors de l'oscillation suivante vers la position extrême correspondant à la position de fermeture, amener et maintenir l'organe d'actionnement dans cette position extrême.

## Claims

1. Device for controlling a valve (1) between an open position and a closed position, comprising:
- a valve actuating member (8) able to move between two extreme positions corresponding to the valve open and valve closed positions,
- an elastic system (17, 20) to cause the actuating member to oscillate between the two extreme positions,
- at least one electromagnet (14, 15) associated with a control unit (23) to attract the actuating member toward one or other of its extreme positions,
the control unit being designed to:
- during an oscillation toward one of the extreme positions, determine an amount of energy needed by the electromagnet in order to bring the actuating member into this extreme position,
- if this amount of energy is at most equal to a predetermined threshold amount, power the electromagnet to complete the oscillation and bring the actuating member into this extreme position,
**characterized in that**
- if this amount of energy is above the predetermined threshold amount, allow the actuating member to set off again toward the other extreme position.

2. Device according to Claim 1, in which, if the amount of energy is above the predetermined threshold amount, the control unit (23) is designed to power the electromagnet (14, 15) in such a way as to attract the actuating member (8) into the other extreme position and keep it there.

3. Device according to Claim 2, in which, when the amount of energy needed by the electromagnet (15) to bring the actuating member (8) into the extreme position corresponding to the valve open position is greater than the predetermined threshold amount, the control unit (23) is designed to power the electromagnet (14) in such a way as to bring the actuating member into the extreme position corresponding to the closed position.

4. Device according to Claim 1, in which, if the amount of energy is greater than the predetermined threshold amount, the control unit (23) is designed to power the electromagnet in such a way as to amplify the oscillation toward the other extreme position.

5. Device according to Claim 4, in which, when the amount of energy needed by the electromagnet (14) to bring the actuating member (8) into the extreme position corresponding to the closed position is greater than the predetermined threshold amount, the control unit (23) is designed to:
- power the electromagnet (15) in such a way as to amplify the oscillation toward the extreme position corresponding to the open position,
- and then, during the next oscillation toward the extreme position corresponding to the closed position, power the electromagnet (14) in such a way as to attract the actuating member into this extreme position and keep it there.

6. Method of controlling a valve (1) between an open position and a closed position, comprising, according to a normal mode of operation, the steps of causing a valve actuating member (8) to oscillate between two extreme positions corresponding to the valve open and valve closed positions, and of bringing the actuating member in a controlled way toward one or other of its extreme positions, it comprising the steps of:
- during an oscillation toward one of the extreme positions, determining an amount of energy needed in order to bring the actuating member into this extreme position,
**characterized in that** it furthermore comprises the steps of:
- if this amount of energy is at most equal to a predetermined threshold amount, completing the oscillation and bringing the actuating member into this extreme position, according to the normal mode of operation,
- if this amount of energy is greater than the predetermined threshold amount, leaving the actuating member to set off again toward the other extreme position, according to a degraded mode of operation.

7. Method according to Claim 6, in which, if the amount of energy is above the predetermined threshold amount, the method in the degraded mode of operation comprises the step of bringing the actuating member (8) into the other extreme position and keeping it there.

8. Device according to Claim 7, in which, when the amount of energy needed by the electromagnet (15) to bring the actuating member (8) into the extreme position corresponding to the valve open position is greater than the predetermined threshold amount, the method comprises the step of bringing the actuating member into the extreme position corresponding to the closed position.

9. Device according to Claim 6, in which, if the amount of energy is greater than the predetermined threshold amount, the method in the degraded mode of operation comprises the step of amplifying the oscillation toward the other extreme position.

10. Device according to Claim 9, in which, when the amount of energy needed to bring the actuating member (8) into the extreme position corresponding to the closed position is greater than the predetermined threshold amount, the method comprises the steps of:
- amplifying the oscillation toward the extreme position corresponding to the open position,
- and then, during the next oscillation toward the extreme position corresponding to the closed position, bringing the actuating member into this extreme position and keeping it there.

## Patentansprüche

1. Vorrichtung zur Steuerung eines Ventils (1) zwischen einer Özfungsstellung und einer Schließstellung, die aufweist:
- ein Betätigungsorgan (8) des Ventils, das zwischen zwei Endstellungen beweglich ist, die der Öffnungs- und der Schließstellung des Ventils entsprechen,
- ein elastisches System (17, 20), um das Betätigungsorgan zwischen den zwei Endstellungen schwingen zu lassen,
- mindestens einen Elektromagnet (14, 15), der einer Steuereinheit (23) zugeordnet ist, um das Betätigungsorgan in die eine oder die andere seiner Endstellungen anzuziehen,
wobei die Steuereinheit ausgebildet ist, um:
- bei einer Schwingung in eine der Endstellungen eine Energiemenge zu bestimmen, die der Elektromagnet benötigt, um das Betätigungsorgan in diese Endstellung zu bringen,
- wenn diese Energiemenge höchstens gleich einer vorbestimmten Schwelle ist, den Elektromagnet speisen, um die Schwingung zu beenden und das Betätigungsorgan in diese Endstellung zu bringen,
**dadurch gekennzeichnet, dass**:
- wenn diese Energiemenge höher als die vorbestimmte Schwelle ist, das Betätigungsorgan in die andere Endstellung zurückgehen zu lassen.

2. Vorrichtung nach Anspruch 1, bei der, wenn die Energiemenge höher als die vorbestimmte Schwelle ist, die Steuereinheit (23) ausgebildet ist, um den Elektromagnet (14, 15) derart zu speisen, dass das Betätigungsorgan (8) in die andere Endstellung angezogen und gehalten wird.

3. Vorrichtung nach Anspruch 2, bei der, wenn die Energiemenge, die der Elektromagnet (15) benötigt, um das Betätigungsorgan (8) in die der Öffnungsstellung des Ventils entsprechende Endstellung zu bringen, höher als die vorbestimmte Schwelle ist, die Steuereinheit (23) ausgebildet ist, um den Elektromagnet (14) derart zu speisen, dass das Betätigungsorgan in die der Schließstellung entsprechende Endstellung gebracht wird.

4. Vorrichtung nach Anspruch 1, bei der, wenn die Energiemenge höher als die vorbestimmte Schwelle ist, die Steuereinheit (23) ausgebildet ist, um den Elektromagnet derart zu speisen, dass die Schwingung in die andere Endstellung verstärkt wird.

5. Vorrichtung nach Anspruch 4, bei der, wenn Energiemenge, die der Elektromagnet (14) benötigt, um das Betätigungsorgan (8) in die der Schließstellung entsprechende Endstellung zu bringen, höher als die vorbestimmte Schwelle ist, die Steuereinheit (23) ausgebildet ist, um:
- den Elektromagnet (15) derart zu speisen, dass die Schwingung in die Endstellung entsprechend der Öffnungsstellung verstärkt wird,
- dann bei der folgenden Schwingung in die der Schließstellung entsprechende Endstellung den Elektromagnet (14) derart zu speisen, dass das Betätigungsorgan in diese Endstellung angezogen und gehalten wird.

6. Verfahren zur Steuerung eines Ventils (1) zwischen einer Öffnungsstellung und einer Schließstellung, das gemäß einer normalen Betriebsart die Schritte enthält, ein Betätigungsorgan (8) des Ventils zwischen zwei Endstellungen schwingen zu lassen, die der Öffnungs- und der Schließstellung des Ventils entsprechen, und das Betätigungsorgan gesteuert in die eine oder die andere seiner Endstellungen zu bringen, das den Schritt enthalt:
- bei einer Schwingung in eine der Endstellungen eine Energiemenge zu bestimmen, die notwendig ist, um das Betätigungsorgan in diese Endstellung zu bringen,
**dadurch gekennzeichnet, dass** es außerdem die folgenden Schritte enthält:
- wenn diese Energiemenge höchstens gleich einer vorbestimmten Schwelle ist, die Schwingung zu beenden und das Betätigungsorgan in diese Endstellung zu bringen, entsprechend der normalen Betriebsart,
- wenn diese Energiemenge höher als die vorbestimmte Schwelle ist, das Betätigungsorgan in die andere Endstellung zurückgehen zu lassen, entsprechend einer Notbetriebsart.

7. Verfahren nach Anspruch 6, bei dem, wenn die Energiemenge höher als die vorbestimmte Schwelle ist, das Verfahren in der Notbetriebsart den Schritt enthält, das Betätigungsorgan (8) in die andere Endstellung zu bringen und zu halten.

8. Vorrichtung nach Anspruch 7, bei der, wenn die Energiemenge, die der Elektromagnet (15) benötigt, um das Betätigungsorgan (8) in die der Öffnungsstellung des Ventils entsprechende Endstellung zu bringen, höher als die vorbestimmte Schwelle ist, das Verfahren den Schritt enthält, das Betätigungsorgan in die der Schließstellung entsprechende Endstellung zu bringen.

9. Vorrichtung nach Anspruch 6, bei der, wenn die Energiemenge höher als die vorbestimmte Schwelle ist, das Verfahren in der Notbetriebsart den Schritt aufweist, die Schwingung in die andere Endstellung zu verstärken.

10. Vorrichtung nach Anspruch 9, bei der, wenn die Energiemenge, die notwendig ist, um das Betätigungsorgan (8) in die der Schließstellung entsprechende Endstellung zu bringen, höher als die vorbestimmte Schwelle ist, das Verfahren die folgenden Schritte enthält:
- die Schwingung in die der Öffnungsstellung entsprechende Endstellung zu verstärken,
- dann, bei der folgenden Schwingung in die der Schließstellung entsprechende Endstellung, das Betätigungsorgan in diese Endstellung zu bringen und zu haltern.
